# EUROPEAN PATENT APPLICATION

(11) **EP 4 748 874 A1**
(43) Date of publication of application: **27.05.2026**
(21) Application number: 25217558.3
(22) Date of filing: 21.11.2025
(51) Int. Cl.: C08J 3/12

(54) **COATED PELLET AND METHOD FOR MANUFACTURING THE SAME**

(30) Priority: 25.11.2024 KR 20240169873
(71) Applicant: SK innovation Co., Ltd., Seoul 03188 (KR); SK Geo Centric Co., Ltd., Seoul 03188 (KR)
(72) Inventor: KIM, Won Bin, 34124 Daejeon (KR); KIM, Hong Chan, 34124 Daejeon (KR); PARK, Ji Hye, 34124 Daejeon (KR); LEE, In Su, 34124 Daejeon (KR); LEE, Ho Seong, 34124 Daejeon (KR); HAN, Jun Hee, 34124 Daejeon (KR)
(74) Representative: Lorenz Seidler Gossel Part. mbB

(57) **Abstract**

A coated pellet according to embodiments of the present disclosure includes a core including an (meth)acrylic resin, and an anti-blocking coating formed on a surface of the core and including an alkali metal salt. The content of the alkali metal salt is 3 ppm to 7,000 ppm based on the total weight of the core and the anti-blocking coating. According to a method for manufacturing coated pellets according to embodiments of the present disclosure, a coating solution including an alkali metal salt and a solvent is prepared. A core including an (meth)acrylic resin and the coating solution are mixed to produce a preliminary coated pellet. The preliminary coated pellet is dried to produce a coated pellet. The content of the alkali metal salt is 0.03 % by weight to 5 % by weight based on the total weight of the coating solution.

## Description

### [BACKGROUND OF THE INVENTION]

### 1. Field of the Invention

The present disclosure relates to a coated pellet and a method for manufacturing the same.

### 2. Description of the Related Art

Acrylic resins, which are high-molecular-weight polymers, are transparent resins with excellent transparency, weather resistance, and mechanical properties. Due to these properties, acrylic resins are used in a variety of fields requiring transparency.

Acrylic resins are typically produced, stored, and distributed in the form of pellets. However, the ester or carboxyl groups contained in the acrylic resins are highly polar functional groups that can react and bond with each other on the surfaces of the pellets, potentially forming aggregates. This may reduce the processability of acrylic resin pellets, and their marketability may be significantly reduced during long-term storage, making them difficult to use.

Techniques have been proposed to prevent caking or blocking, which are aggregation phenomena of pellets. For example, techniques have been proposed to mix anti-blocking agents during the formation of pellets or to apply anti-blocking treatments to the pellet surfaces. However, these techniques may fail to prevent caking during long-term storage of acrylic resin pellets, or discoloration of the pellets may lead to reduced marketability.

### [SUMMARY OF THE INVENTION]

An object of the present disclosure is to provide a coated pellet in which agglomeration is suppressed.

Another object of the present disclosure is to provide a method for manufacturing the coated pellet.

A coated pellet according to the present disclosure includes: a core including a (meth)acrylic resin; and an anti-blocking coating formed on a surface of the core and including an alkali metal salt. The content of the alkali metal salt is 3 ppm to 7,000 ppm based on the total weight of the core and the anti-blocking coating.

In exemplary embodiments, the content of the alkali metal salt may be 3 ppm to 3,000 ppm based on the total weight of the core and the anti-blocking coating.

In exemplary embodiments, the content of the alkali metal salt may be 5 ppm to 2,000 ppm based on the total weight of the core and the anti-blocking coating.

plary embodiments, the content of the alkali metal salt may be 10 ppm to 1,500 ppm based on the total weight of the core and the anti-blocking coating.

In exemplary embodiments, the (meth)acrylic resin may include a (meth)acrylic acid-derived repeating unit.

In exemplary embodiments, the content of the (meth)acrylic acid-derived repeating unit may be 10% by weight to 30% by weight based on the total weight of the (meth)acrylic resin.

In exemplary embodiments, the content of the (meth)acrylic acid-derived repeating unit may be 10% by weight to 25% by weight based on the total weight of the (meth)acrylic resin.

In exemplary embodiments, the content of the (meth)acrylic acid-derived repeating unit may be 10% by weight to 20% by weight based on the total weight of the (meth)acrylic resin.

In exemplary embodiments, the alkali metal salt may include a sodium salt.

In exemplary embodiments, the alkali metal salt may include an alkali metal phosphate.

In exemplary embodiments, the alkali metal salt may not include an alkali metal carboxylate.

In exemplary embodiments, the alkali metal salt may include at least one selected from the group consisting of trisodium phosphate, sodium sulfite, sodium silicate, and sodium caprylate.

In exemplary embodiments, the alkali metal salt may include at least one selected from the group consisting of trisodium phosphate and sodium silicate.

In exemplary embodiments, the (meth)acrylic resin may include a repeating unit derived from a (meth)acrylic monomer, and the (meth)acrylic monomer may include at least one selected from the group consisting of an alkyl (meth)acrylate, a hydroxyl-containing (meth)acrylate, a carboxyl-containing (meth)acrylate, and an alkoxy-containing (meth)acrylate.

In exemplary embodiments, the pH of the alkali metal salt may be greater than the pH of the (meth)acrylic resin.

According to a method for manufacturing a coated pellet of the present disclosure, a coating solution including an alkali metal salt and a solvent is prepared. A core including a (meth)acrylic resin is mixed with the coating solution to produce a preliminary coated pellet. The preliminary coated pellet is dried to produce a coated pellet. The content of the alkali metal salt is 0.03% by weight to 5% by weight based on the total weight of the coating solution.

In exemplary embodiments, the content of the alkali metal salt may be 0.03% by weight to 1% by weight based on the total weight of the coating solution.

In exemplary embodiments, the content of the alkali metal salt may be 0.01% by weight to 0.5% by weight, based on the total weight of the coating solution.

In exemplary embodiments, the drying may be performed for 20 to 30 hours.

In exemplary embodiments, the drying may be performed at a temperature of 20°C to 30°C.

In exemplary embodiments, the coating solution is may be aqueous solution and the solvent may be an aqueous solvent.

In exemplary embodiments, the core may be mixed at an amount of 1 to 10 parts by weight, or 2 to 8 parts by weight, or 3 to 7 parts by weight, or 4 to 6 parts by weight, based on the coating solution.

The coated pellet according to exemplary embodiments of the present disclosure may be capable of preventing adhesion between pellets even when stored under high-pressure conditions. Accordingly, caking of the pellets may be prevented, and the handling and storability of the pellets may be improved.

According to the method for manufacturing a coated pellet of the present disclosure, adhesion between pellets may be reduced in a simple way.

### [DETAILED DESCRIPTION OF THE INVENTION]

According to exemplary embodiments of the present disclosure, a coated pellet including a core having a coated surface is provided. In addition, a method for manufacturing the coated pellet is provided.

The coated pellet according to exemplary embodiments includes a core and an anti-blocking coating. The core includes a (meth)acrylic resin, and the anti-blocking coating is formed on the surface of the core and includes an alkali metal salt.

The core may be prepared in the form of pellets composed of a (meth)acrylic resin and having no anti-blocking coating applied thereto. The core may be produced by methods known to those skilled in the art, or may be prepared by purchasing a commercially available product.

The (meth)acrylic resin may include a polymer or copolymer formed by polymerizing a (meth)acrylic monomer or a monomer mixture including a (meth)acrylic monomer. The (meth)acrylic resin may include repeating units derived from the (meth)acrylic monomer.

The term "(meth)acrylic monomer" may include a compound having an acrylic group (CH₂=CH-C(=O)-O-) or a methacrylic group (CH₂=C(CH₃)-C(=O)-O-) as a (meth)acrylic acid or (meth)acrylate monomer. The (meth)acrylic resin may be formed by polymerizing through cleavage of the carbon-carbon double bond in the (meth)acrylic group included in the (meth)acrylic monomer.

The (meth)acrylic monomer is not particularly limited as long as it has a (meth)acrylic group, but may include, for example, alkyl (meth)acrylates, hydroxyl group-containing (meth)acrylates, carboxyl group-containing (meth)acrylates, alkoxy group-containing (meth)acrylates, and the like. These may be used alone or in combination of two or more thereof.

The alkyl (meth)acrylate may include, for example, acrylic acid, methacrylic acid, and the like.

The alkyl (meth)acrylate may include, for example, methyl (meth)acrylate, ethyl (meth)acrylate, propyl (meth)acrylate, isopropyl (meth)acrylate, n-butyl (meth)acrylate, sec-butyl (meth)acrylate, 1,3-dimethylbutyl (meth)acrylate, pentyl (meth)acrylate, isopentyl (meth)acrylate, hexyl (meth)acrylate, 2-ethylbutyl (meth)acrylate, heptyl (meth)acrylate, n-octyl (meth)acrylate, isooctyl (meth)acrylate, 2-ethylhexyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, n-tetradecyl (meth)acrylate, and the like. These may be used alone or in combination of two or more thereof.

The hydroxyl group-containing (meth)acrylate may include, for example, 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl (meth)acrylate, and the like. These may be used alone or in combination of two or more thereof.

The carboxyl-containing (meth)acrylate may include, for example, carboxyethyl (meth)acrylate, carboxypentyl (meth)acrylate, and the like. These may be used alone or in combination of two or more thereof.

The alkoxy-containing (meth)acrylate may include, for example, 2-methoxyethyl acrylate, polyether-containing acrylate, and the like.

In addition to the (meth)acrylates listed above, the monomer mixture may further include polymerizable monomers having unsaturated groups.

For example, the polymerizable monomer may include aromatic alkenyl monomers such as styrene, α-methylstyrene, p-methylstyrene, and p-methoxystyrene; vinyl cyanide monomers such as acrylonitrile, and methacrylonitrile; and unsaturated aliphatic monomers such as butadiene, ethylene, and propylene.

In some embodiments, the (meth)acrylic resin may include repeating units derived from (meth)acrylic acid monomers. For example, the (meth)acrylic resin may include a polymer of a monomer mixture including (meth)acrylic acid and ethylene.

In exemplary embodiments, the content of the (meth)acrylic acid-derived repeating units may be 10% by weight ("wt%") to 30 wt% based on the total weight of the (meth)acrylic resin, or 10wt% to 25wt%, or 10wt% to 20wt%. In some embodiments, the content of the (meth)acrylic acid-derived repeating units may be 13 wt% to 27 wt%, 13.5 wt% to 25 wt%, or 18 wt% to 23 wt% based on the total weight of the (meth)acrylic resin.

Within the above range, the caking and blocking prevention properties of the anti-blocking coating described below may be more effectively exhibited.

In exemplary embodiments, the (meth)acrylic resin may include an ethylene-acrylic acid resin. The (meth)acrylic resin may include an ethylene-derived repeating unit and an acrylic acid-derived repeating unit. The content of the acrylic acid-derived repeating unit, based on the total weight of the ethylene-acrylic acid resin, may be 10 wt% to 30 wt%, or any of the ranges above, and the content of the ethylene-derived repeating unit may be the balance, for example, 70 wt% to 90 wt%.

According to exemplary embodiments, the anti-blocking coating includes an alkali metal salt. The alkali metal salt may function as an anti-tacking agent.

The alkali metal salt may include an alkali metal having a higher ionization tendency, thereby enhancing the polarity of the anti-blocking coating and enabling the (meth)acrylic resin to bond firmly with the anti-blocking coating.

In addition, the alkali metal salt may be easily ionized, and the anti-blocking coating may include a large amount of cations. This can result in a repulsive force acting between the anti-blocking coatings and the surfaces of the coated pellets, thereby preventing caking of the pellets.

According to exemplary embodiments, the alkali metal salt may include an alkali metal such as sodium, potassium, or rubidium.

According to exemplary embodiments, the alkali metal salt may include a sodium salt. Sodium has a high ionization tendency, allowing it to form monovalent cations. Protons may rapidly migrate from the pellet surface, forming strong metal ion bonds on the pellet surface. This may increase the repulsive force between metal cations on the pellets, thereby preventing caking of the pellets.

In addition, sodium salts may have higher solubility in an aqueous solvent than calcium salts, thereby improving the efficiency of the manufacturing process for coated pellets.

The alkali metal salt may include inorganic anions such as silicate, sulfite, sulfate, phosphate, polyphosphate or hydrosulfite, or organic anions such as caprylate or citrate. In one embodiment, the alkali metal salt may include an inorganic anion.

According to exemplary embodiments, the pH of the alkali metal salt may be 5 or more. In some embodiments, the pH of the alkali metal salt may be 6 or more, 7 or more, 8 or more, 9 or more, 10 or more, or 11 or more. Within this range, the pH of the alkali metal salt may be greater than the pH of the (meth)acrylic resin.

According to exemplary embodiments, the alkali metal salt may include an alkali metal phosphate. As a trivalent anion, phosphate may bind to a greater number of cations, thereby further enhancing the anti-blocking performance of the anti-blocking coating.

According to exemplary embodiments, the alkali metal salt may include at least one selected from the group consisting of trisodium phosphate, sodium sulfite, sodium silicate, and sodium caprylate. In one embodiment, the alkali metal salt may include at least one selected from the group consisting of trisodium phosphate and sodium silicate. In one embodiment, the alkali metal salt may include trisodium phosphate.

In exemplary embodiments, the alkali metal salt may not include an alkali metal carboxylate. A carboxylate may react with the carboxyl or ester groups included in the (meth)acrylic resin, thereby promoting the occurrence of caking.

In exemplary embodiments, the content of the alkali metal salt may be 3 ppm to 7,000 ppm based on the total weight of the core and the anti-blocking coating. In some embodiments, the content of the alkali metal salt may be 3 ppm to 6,000 ppm, or 3 ppm to 3,000 ppm, or 5 ppm to 2,000 ppm, or 10 ppm to 1,500 ppm, based on the total weight of the core and the anti-blocking coating.

If the content of the alkali metal salt is less than 3 ppm, adhesion between pellets cannot be prevented. If the content of the alkali metal salt is greater than 7,000 ppm, the alkali metal salt may precipitate during the production process of the coated pellet, causing an uneven coating layer to form on the pellet surface, and potentially clogging the piping of the manufacturing equipment with the precipitate.

According to exemplary embodiments, when the content of the (meth)acrylic acid-derived repeating unit is 10 wt% to 20 wt% based on the total weight of the (meth)acrylic resin of the core, the content of the alkali metal salt may be 3 to 2,000 ppm, or 10 to 1,500 ppm based on the total weight of the core and the anti-blocking coating.

According to exemplary embodiments, when the content of the (meth)acrylic acid-derived repeating unit is greater than 20 wt% and less than or equal to 30 wt% based on the total weight of the (meth)acrylic resin of the core, the content of the alkali metal salt may be 3 ppm to 6,500 ppm or 4.5 ppm to 6,000 ppm based on the total weight of the core and the anti-blocking coating.

According to exemplary embodiments, the average particle diameter of the coated pellets is not particularly limited, and the coating may be applied to prevent caking between resin pellets of various sizes.

According to the present disclosure, a method for manufacturing the coated pellets is provided.

According to exemplary embodiments, a coating solution including the alkali metal salt and a solvent is prepared. The alkali metal salt may be any of the above-described salts, and the solvent is not particularly limited, but may be an aqueous solvent capable of dissolving the alkali metal salt. For example, the solvent may be water.

According to exemplary embodiments, the content of the alkali metal salt may be 0.03 wt% to 5 wt% based on the total weight of the coating solution. According to some embodiments, the content of the alkali metal salt may be 0.03 wt% to 1% by weight, or 0.1% by weight to 0.5 wt% based on the total weight of the coating solution.

Within the above range, surface adhesion between pellets may be prevented while maintaining the pellet color and physical properties.

If the content of the alkali metal salt is less than 0.03 wt%, adhesion of the pellets cannot be prevented. If the content of the alkali metal salt is greater than 5 wt%, precipitates of the alkali metal salt may clog the piping of the manufacturing equipment during the manufacturing process of the coated pellets, thereby reducing productivity.According to exemplary embodiments, a core including the (meth)acrylic resin is mixed with the coating solution to produce preliminary coated pellets. The above-described (meth)acrylic resin may be used.

According to exemplary embodiments, the coating solution may be an aqueous solution. The solvent may be an aqueous solvent.

According to exemplary embodiments, the core may mixed at an amount of 1 to 10 parts by weight, or 3 to 7 parts by weight, based on the coating solution.

After adding the core to the coating solution, the mixture may be stirred and mixed for about 10 to 60 minutes. After mixing, the mixture may be filtered to obtain the preliminary coated pellets.

According to exemplary embodiments, the preliminary coated pellets are dried to produce coated pellets. In the preliminary coated pellets, the solvent may remain on the core surface. Drying may be performed to remove the residual solvent and form an anti-blocking coating on the core surface.

According to exemplary embodiments, the drying may be performed for 20 to 30 hours. For example, the drying may be conducted at a temperature of 20 °C to 30 °C.

The coated pellets may remain free from adhesion to each other even when stored at high temperatures for an extended period. In exemplary embodiments, a plurality of coated pellets may remain non-adherent even when stored at a temperature of 40°C to 70°C for 10 hours or more. In one embodiment, the plurality of coated pellets may remain non-adherent even when stored at a temperature of 45°C to 60°C for 15 hours or more.

The coated pellets may remain non-adherent even under high-temperature and high-pressure conditions. In exemplary embodiments, a plurality of coated pellets may remain non-adherent even when stored at a temperature of 40 °C to 70 °C for 10 hours or more under a pressure of about 0.4 bar·g or higher. In some embodiments, the plurality of coated pellets may remain non-adherent even when stored at a temperature of 45 °C to 60 °C for 15 hours or more under a pressure of about 0.5 bar·g or higher.

The invention relates also to the following numbered aspects:
Aspect 1. A coated pellet comprising: a core comprising a (meth)acrylic resin; and an anti-blocking coating formed on a surface of the core and comprising an alkali metal salt, wherein the content of the alkali metal salt is 3 ppm to 7,000 ppm, or 3 ppm to 3,000 ppm based on the total weight of the core and the anti-blocking coating.
Aspect 2. The coated pellet according to aspect 1, wherein the (meth)acrylic resin comprises a (meth)acrylic acid-derived repeating unit.
Aspect 3. The coated pellet according to aspect 2, wherein the content of the (meth)acrylic acid-derived repeating unit is 10% by weight to 30% by weight, or 10% by weight to 20% by weight based on the total weight of the (meth)acrylic resin.
Aspect 4. The coated pellet according to any one of aspects 1 to 3, wherein the alkali metal salt comprises a sodium salt.
Aspect 5. The coated pellet according to any one of aspects 1 to 4, wherein the alkali metal salt comprises an alkali metal phosphate.
Aspect 6. The coated pellet according to any one of aspects 1 to 5, wherein the alkali metal salt does not comprise an alkali metal carboxylate.
Aspect 7. The coated pellet according to any one of aspects 1 to 6, wherein the alkali metal salt comprises at least one selected from the group consisting of trisodium phosphate, sodium sulfite, sodium silicate, and sodium caprylate.
Aspect 8. The coated pellet according to any one of aspects 1 to 7, wherein the (meth)acrylic resin comprises a repeating unit derived from a (meth)acrylic monomer, and the (meth)acrylic monomer comprises at least one selected from the group consisting of an alkyl (meth)acrylate, a hydroxyl-containing (meth)acrylate, a carboxyl-containing (meth)acrylate, and an alkoxy-containing (meth)acrylate.
Aspect 9. The coated pellet according to any one of aspects 1 to 8, wherein the pH of the alkali metal salt is greater than the pH of the (meth)acrylic resin.
Aspect 10. A method for manufacturing a coated pellet, comprising: preparing a coating solution comprising an alkali metal salt and a solvent; mixing a core comprising a (meth)acrylic resin with the coating solution to produce a preliminary coated pellet; and drying the preliminary coated pellet to produce a coated pellet, wherein the content of the alkali metal salt is 0.03% by weight to 5% by weight, or 0.03% by weight to 0.5% by weight based on the total weight of the coating solution.
Aspect 11. The method for manufacturing a coated pellet according to aspect 10, wherein the drying is performed for 20 to 30 hours.
Aspect 12. The method for manufacturing a coated pellet according to aspect 10 or 11, wherein the drying is performed at a temperature of 20°C to 30°C.

### Preparative Example 1

A monomer mixture including ethylene and acrylic acid in a weight ratio of 79.3:20.7 and an initiator were introduced into a reactor and reacted at a pressure of about 26,700 psig and a temperature of 245 to 260°C for less than 1 minute. After the reaction, the unreacted monomers were removed through a depressurization process to obtain an ethylene-acrylic acid resin core.

### Preparative Example 2

A monomer mixture including ethylene and acrylic acid in a weight ratio of 86.5:13.5 and an initiator were introduced into a reactor and reacted at a pressure of about 31,000 psig and a temperature of 235 to 240°C for less than 1 minute. After the reaction, the unreacted monomers were removed through a depressurization process to obtain an ethylene-acrylic acid resin core.

### Example 1

An aqueous solution containing 0.03 wt% trisodium phosphate as an alkali metal salt was prepared. 5 parts by weight of the acrylic resin core obtained in Preparative Example 1 were added to 100 parts by weight of the prepared aqueous solution and stirred for 30 minutes. The resulting preliminary coated pellets were filtered and then dried at room temperature (25 °C) for 24 hours to produce coated pellets.

### Examples 2 to 28 and Comparative Examples 1 to 6

Coated pellets were prepared in the same manner as in Example 1, except that the type and content of the alkali metal salt in the aqueous solution, and the type of acrylic resin core, were varied as shown in Table 1 below.

The content of the alkali metal salt in the coated pellets of the examples and comparative examples was measured using an inductively coupled plasma (ICP) analyzer.

Specifically, about 0.55 g of the coated pellets from the examples and comparative examples were mixed with sulfuric acid and heated to cause carbonization. The mixture was then cooled to room temperature and subjected to two-step ashing in an electric furnace at 250 °C and 600 °C. After completion of the ashing process, the mixture was cooled again to room temperature, nitric acid was added, and the mixture was heated to dissolve the residue, thereby preparing a solution. The resulting diluted solution was analyzed using the ICP analyzer to determine the content of the alkali metal salt.

**[TABLE 1]**

| | Alkali metal salt | | | Acrylic resin core |
|---|---|---|---|---|
| | Type | Content of solution (wt%) | Content of coated pellets (ppm) | |
| Example 1 | TSP | 0.03 | 4.7 | A-1 |
| Example 2 | TSP | 0.05 | 5.1 | A-1 |
| Example 3 | TSP | 0.1 | 8.7 | A-1 |
| Example 4 | TSP | 0.3 | 1,400 | A-1 |
| Example 5 | TSP | 0.5 | 1,300 | A-1 |
| Example 6 | TSP | 1 | 3,400 | A-1 |
| Example 7 | TSP | 5 | 6,000 | A-1 |
| Comparative Example 1 | TSP | 0 | 0 | A-1 |
| Comparative Example 2 | TSP | 0.01 | 0 | A-1 |
| Example 8 | TSP | 0.03 | 11 | A-2 |
| Example 9 | TSP | 0.05 | 12 | A-2 |
| Example 10 | TSP | 0.1 | 25 | A-2 |
| Example 11 | TSP | 0.3 | 119 | A-2 |
| Example 12 | TSP | 0.5 | 258 | A-2 |
| Comparative Example 3 | TSP | 0 | 0 | A-2 |
| Example 13 | SS | 0.03 | 3.1 | A-1 |
| Example 14 | SS | 0.05 | 7.7 | A-1 |
| Example 15 | SS | 0.1 | 10.5 | A-1 |
| Example 16 | SS | 0.3 | 1,900 | A-1 |
| Example 17 | SS | 0.5 | 2,200 | A-1 |
| Example 18 | SS | 5 | 2,200 | A-1 |
| Comparative Example 4 | SS | 0.01 | 0 | A-1 |
| Example 19 | SS | 0.03 | 5.8 | A-2 |
| Example 20 | SS | 0.05 | 5.8 | A-2 |
| Example 21 | SS | 0.1 | 25 | A-2 |
| Example 22 | SS | 0.3 | 78 | A-2 |
| Example 23 | SS | 0.5 | 264 | A-2 |
| Example 24 | SS | 1 | 341 | A-2 |
| Example 25 | SS | 3 | 1,100 | A-2 |
| Example 26 | SS | 5 | 1,500 | A-2 |
| Comparative Example 5 | SS | 0 | 0 | A-2 |
| Example 27 | SP | 0.3 | 85 | A-2 |
| Example 28 | SP | 0.5 | 208 | A-2 |
| Comparative Example 6 | SP | 0 | 0 | A-2 |

The abbreviations in Table 1 above have the following meanings:
TSP: Trisodium phosphate
SS: Sodium silicate
SP: Sodium caprylate
A-1: Ethylene-acrylic acid resin core of Preparative Example 1 (acrylic acid content: 20.7 wt%)
A-2: Ethylene-acrylic acid resin core of Preparative Example 2 (acrylic acid content: 13.5 wt%)

### Experimental Example

About 5 g of the coated pellets of the examples and comparative examples were placed in a stainless steel cup, and a pressure was applied thereto using a 4.5 kg (about 0.55 bar·g) weight. The cup was then placed in an oven at 50 °C and maintained for 17 hours. After removal from the oven, the cup was inverted, and the weight of the pellets that fell from the cup was measured and calculated as a percentage relative to the initial loading of 5 g. For example, when all of the pellets fell from the cup, the evaluation value was 100%, and when all of the pellets agglomerated and did not fall from the cup, the evaluation value was 0%. The evaluation results are shown in Table 2 below.

**[TABLE 2]**

| | Evaluation value (%) |
|---|---|
| Example 1 | 5.71 |
| Example 2 | 8.2 |
| Example 3 | 10.89 |
| Example 4 | 96.46 |
| Example 5 | 100 |
| Example 6 | 100 |
| Example 7 | 100 |
| Comparative Example 1 | 0 |
| Comparative Example 2 | 0 |
| Example 8 | 100 |
| Example 9 | 100 |
| Example 10 | 100 |
| Example 11 | 100 |
| Example 12 | 100 |
| Comparative Example 3 | 35 |
| Example 13 | 6 |
| Example 14 | 100 |
| Example 15 | 100 |
| Example 16 | 100 |
| Example 17 | 100 |
| Example 18 | 100 |
| Comparative Example 4 | 0 |
| Example 19 | 100 |
| Example 20 | 100 |
| Example 21 | 100 |
| Example 22 | 100 |
| Example 23 | 100 |
| Example 24 | 100 |
| Example 25 | 100 |
| Example 26 | 100 |
| Comparative Example 5 | 42.83 |
| Example 27 | 64.57 |
| Example 28 | 83.52 |
| Comparative Example 6 | 35 |

Referring to Table 2 above, it was confirmed that the coated pellets of Examples 1 to 7, which used trisodium phosphate as the alkali metal salt and the ethylene-acrylic acid resin core of Preparative Example 1, exhibited higher evaluation values and showed reduced agglomeration as compared to the coated pellets of Comparative Examples 1 and 2. In addition, in Examples 8 to 12, which used the ethylene-acrylic acid resin core of Preparative Example 2, it was confirmed that agglomeration occurred less frequently than in the coated pellets of Comparative Example 3.

The coated pellets of Examples 13 to 18, which used sodium silicate as the alkali metal salt and the ethylene-acrylic acid resin core of Preparative Example 1, exhibited higher evaluation values than the coated pellets of Comparative Example 4, confirming that agglomeration occurred less frequently. In addition, Examples 19 to 26, which used the ethylene-acrylic acid resin core of Preparative Example 2, exhibited higher evaluation values than Comparative Example 5.

Examples 27 and 28, which used sodium caprylate as the alkali metal salt and the ethylene-acrylic acid resin core of Preparative Example 2, exhibited higher evaluation values than Comparative Example 6, confirming reduced agglomeration and suppression of caking.

## Claims

1. A coated pellet comprising:
a core comprising a (meth)acrylic resin; and
an anti-blocking coating formed on a surface of the core and comprising an alkali metal salt,
wherein the content of the alkali metal salt is 3 ppm to 7,000 ppm, based on the total weight of the core and the anti-blocking coating.

2. The coated pellet according to claim 1, wherein the content of the alkali metal salt is 3 ppm to 3,000 ppm, or 5 ppm to 2,000 ppm, or 10 ppm to 1,500 ppm, based on the total weight of the core and the anti-blocking coating.

3. The coated pellet according to claim 1 or 2, wherein the (meth)acrylic resin comprises a (meth)acrylic acid-derived repeating unit, wherein the content of the (meth)acrylic acid-derived repeating unit preferably is 10% by weight to 30% by weight, or 10% by weight to 25% by weight, or 10% by weight to 20% by weight based on the total weight of the (meth)acrylic resin.

4. The coated pellet according to any one of claims 1 to 3, wherein the alkali metal salt comprises a sodium salt.

5. The coated pellet according to any one of claims 1 to 4, wherein the alkali metal salt comprises an alkali metal phosphate.

6. The coated pellet according to any one of claims 1 to 5, wherein the alkali metal salt does not comprise an alkali metal carboxylate.

7. The coated pellet according to any one of claims 1 to 6, wherein the alkali metal salt comprises at least one selected from the group consisting of trisodium phosphate, sodium sulfite, sodium silicate, and sodium caprylate, preferably from the group consisting of trisodium phosphate and sodium silicate.

8. The coated pellet according to any one of claims 1 to 7, wherein the (meth)acrylic resin comprises a repeating unit derived from a (meth)acrylic monomer, and the (meth)acrylic monomer comprises at least one selected from the group consisting of an alkyl (meth)acrylate, a hydroxyl-containing (meth)acrylate, a carboxyl-containing (meth)acrylate, and an alkoxy-containing (meth)acrylate.

9. The coated pellet according to any one of claims 1 to 8, wherein the pH of the alkali metal salt is greater than the pH of the (meth)acrylic resin.

10. A method for manufacturing a coated pellet, comprising:
preparing a coating solution comprising an alkali metal salt and a solvent;
mixing a core comprising a (meth)acrylic resin with the coating solution to produce a preliminary coated pellet; and
drying the preliminary coated pellet to produce a coated pellet,
wherein the content of the alkali metal salt is 0.03% by weight to 5% by weight, based on the total weight of the coating solution.

11. The method for manufacturing a coated pellet according to claim 10, wherein the content of the alkali metal salt is 0.03% by weight to 1% by weight, or 0.1% by weight to 0.5% by weight, based on the total weight of the coating solution.

12. The method for manufacturing a coated pellet according to claim 10 or 11, wherein the drying is performed for 20 to 30 hours.

13. The method for manufacturing a coated pellet according to any one of claims 10 to 12, wherein the drying is performed at a temperature of 20°C to 30°C.

14. The method for manufacturing a coated pellet according to any one of claims 10 to 13, wherein the coating solution is an aqueous solution.

15. The method for manufacturing a coated pellet according to any one of claims 10 to 14, wherein the core is mixed at an amount of 1 to 10 parts by weight, or 3 to 7 parts by weight, based on the coating solution.
